# EUROPEAN PATENT SPECIFICATION

(11) **EP 3 149 381 B1**
(45) Date of publication and mention of the grant of the patent: **03.10.2018**
(21) Application number: 15799256.1
(22) Date of filing: 29.05.2015
(51) Int. Cl.: F16L 37/08, F16L 37/091

(54) **FLUID CONNECTOR WITH FULL INSERTION ASSURANCE CAP WITH SECONDARY LATCHES**
FLÜSSIGKEITSKUPPLUNG MIT KAPPE ZUR SICHERSTELLUNG DES KOMPLETTEN EINSATZES MIT SEKUNDÄREN VERRIEGELUNGSELEMENTEN
RACCORD DE FLUIDE POURVU D'UN CAPUCHON DE SÛRETÉ D'INSERTION COMPLÈTE COMPORTANT DES VERROUS SECONDAIRES

(30) Priority: 30.05.2014 US 201462005136 P
(43) Date of publication of application: 05.04.2017
(73) Proprietor: Oetiker NY, Inc., Lancaster NY 14086 (US)
(72) Inventor: KUJAWSKI, James, Attica, New York 14011 (US)
(74) Representative: Strehl Schübel-Hopf & Partner
(86) International application number: PCT/US2015/033341
(87) International publication number: WO 2015/184363

(56) References cited:
- KR-B1- 101 180 871
- KR-Y1- 200 269 735
- US-A- 4 915 421
- US-A- 5 749 606
- US-A1- 2013 200 607
- US-B2- 6 543 814

## Description

### BACKGROUND

The present apparatus relates to fluid connectors including a fluid carrying tubular member which is coupled to a fitting body connected to a device which uses the fluid (see for instance document US-A-5 749 606). In an automotive application, the fluid carrying components are connected at one end to an automatic transmission and at another end to a cooler disposed within a vehicle radiator. Other automotive applications using fluid connectors include turbo connections.

Such quick connectors typically include a resilient clip carried on the fitting body which is adapted to snap behind a raised shoulder of an end form on the tubular member when the tubular member is fully inserted into the fitting body to lock the tubular member in place.

Assurance caps can be used to insure full insertion of the tubular member in the body. As assurance cap is carried by the tubular member and slides over the tubular member insertion end of the body and snaps over the outer edges of the resilient clip. If the tubular member is not fully inserted in the body such that the resilient clip is not seated behind the raised shoulder on the tubular member, raised portions of the resilient clip extend further radially outward from the body and interfere with the complete movement of the assurance cap to its fully installed position thereby providing an indication to the installer that the tubular member is not fully latched in the body.

### SUMMARY

A fluid connection with an assurance cap for assuring full insertion and latching of a tubular member in a connector body includes having an endform spaced from a first insertion end defining a radially disposed shoulder, a connector body having a bore with one open end receiving the tubular member. A retainer clip is carried on the connector body and extends partially into the bore to engage the shoulder of the tubular member to lock the tubular member in the connector body when an insertion end of the tubular member is fully inserted into the bore in the fitting body. An assurance cap is slidably mounted relative to the tubular member. The assurance cap defining an annular body with a plurality of primary latch fingers with end projections configured for latching in a recessed groove in the connector body spaced from one end of the connector body to latch the assurance cap on the connector body only when the tubular member is fully inserted into the connector body. A secondary latch is carried on the assurance cap body for engaging one of the retainer clip and the tubular member to secondarily latch the assurance cap to the tubular member only when the tubular is fully inserted into the bore in the connector body.

The primary latch fingers may comprise a plurality of circumferentially spaced primary latch fingers extending from a first end of the assurance cap body.

In one aspect, the primary latch fingers include a radially inward projection formed on a flexible end of the primary latch finger; and a radially outward opening groove formed in the connector body, spaced from the one open end of the connector body, the groove and the projections on the primary latch fingers engageable to primarily latch the assurance cap to the connector body only when the tubular member is fully inserted into the bore in the connector body.

The secondary latch may include an inner support ring fixed in the assurance cap body radially inward of the primary latch fingers, the inner support ring having a through bore through which the tubular member extend, the inner support ring having an inner end positioned to engage a surface on the tubular member to provide a secondary latch between the assurance cap body and the tubular member when the tubular member is fully inserted into the bore in the connector body.

The surface on the tubular member is axially spaced from the endform and defines a raised surface on the tubular member.

The secondary latch may include a plurality of stepped fingers circumferentially spaced between the primary latch finger, each of the stepped fingers having an inner stepped surface configured to overlay a radially outward portion of the retainer clip when the assurance cap is latched to the quick connector body and the tubular member to resist radially outward expansion of the retainer clip.

The primary latch fingers may include a plurality of circumferentially spaced primary latch fingers extending from a first end of the assurance cap body, and one stepped finger disposed intermediate at least one primary latch finger.

The plurality of primary latch fingers may be arranged in circumferentially spaced pairs of adjacent side-by-side arranged primary latch fingers, and one stepped finger is interposed between each pair of primary latch fingers.

The raised portion of the connector body may include an outward extending tapered portion extending from the outer diameter of the connector body to the outer surface of the raised portion on the connector body.

The raised portion formed on a receiving end of the fitting body having an outer diameter substantially equal to an outer diameter of the receiving end of the fitting body extending from the receiving end of the fitting body, an annular recess positioned adjacent to the raised portion for receiving the latch fingers of the assurance cap in a latch position of the assurance cap on the fitting body.

The connector assembly including the assurance cap body having pivotally connected first and second sections lockable in a continuous annular body about the tubular member, and the first and second section of the assurance cap body being pivotally movable relative to a pivotally connected end to allow mounting of the assurance cap body around the tubular member.

The connector assembly including secondary latch includes an inner support ring fixed in the assurance cap body radially inward of the primary latch fingers, the inner support ring having a through bore through which the tubular member extends, the inner support ring having an inner end positioned to engage a surface on the tubular member to provide a secondary latch between the assurance cap body and the tubular member when the tubular member is fully inserted into the bore in the connector body, the surface on the tubular member is axially spaced from the endform and defines a raised surface on the tubular member; a plurality of stepped fingers circumferentially spaced between the primary latch fingers, and
each of the stepped fingers having an inner stepped surface configured to overlay a radially outward portion of the retainer clip when the assurance cap is latched to the quick connector body and the tubular member to resist radially outward expansion of the retainer clip.

The connector assembly includes the primary latch fingers further including a plurality of circumferentially spaced primary latch fingers extending from a first end of the assurance cap body, and one step finger disposed intermediate at least one primary latched finger.

The connector assembly including the plurality of primary latch fingers arranged in circumferentially spaced pairs of adjacent side-by-side arranged primary latch fingers, and one stepped finger interposed between each pair of primary latch fingers.

### BRIEF DESCRIPTION OF THE DRAWING

The various features, advantages and other uses of the present fluid connector with full insertion assurance cap with secondary latches will become more apparent by referring to the following description and drawings in which:
FIG. 1 is a cross-sectioned perspective view of a prior art fluid quick connector with assurance cap;
FIG. 2 is a perspective view of an assembled quick connector and assurance cap described herein;
FIG. 3A is a longitudinal cross-sectional view generally taken along line 3A-3A in FIG. 2;
FIG. 3B is a longitudinal cross-sectional view generally taken along line 3B-3B in FIG. 2;
FIG. 4 is a perspective view of a right end of the assurance cap shown in FIG. 2;
FIG. 5 is a perspective view from the opposite end of the assurance cap shown in FIG. 4;
FIG. 6 is an end view of the assurance cap shown in FIG. 4;
FIG. 7 is a cross-sectional view generally taken along line 7-7 in FIG. 6;
FIG. 8 is a longitudinal cross-sectional view showing the position of the assurance cap and quick connector body when the tubular member is not fully inserted into the quick connector body;
FIG. 9 is a partially cross-sectioned perspective view of a quick connector body with another aspect of an assurance cap;
FIG. 10 is a perspective view of one end of the assurance cap shown in FIG. 9;
FIG. 11 is a partially cross-sectioned side elevation view of the assurance cap shown in FIG. 10;
FIG. 12 is a view of an opposite end of the assurance cap shown in FIG. 10;
FIG. 13 is a perspective view of an opposite end of the assurance cap shown in FIGS. 10-12;
FIG. 14 is a longitudinal cross-sectional view showing the fully latched position of the assurance cap of FIGS. 9-13 on the quick connector body;
FIG. 15A is a side elevational view of a fluid tube insertable into the quick connector body;
FIGS. 15B, 15C, AND 15D are a perspective view showing the installation of the tubular member shown in the assurance cap of FIGS. 9-13 to pre-mount the assurance cap on the tubular member;
FIG. 16A is another aspect of an assurance cap;
FIG. 16B is a partially opened, perspective view of the assurance cap shown in FIG. 16A;
FIG. 16C is a longitudinal cross-sectioned, perspective view of the assurance cap shown in FIGS. 16A and 16B mounted on a tubular member fully inserted mounting position on a quick connector body;
FIG. 17A is a perspective view of another aspect of an assurance cap;
FIG. 17B is a cross-sectional view of the assurance cap shown in FIG. 17A;
FIG. 18A is a perspective view of another aspect of an assurance cap;
FIG. 18B is a cross-sectional view of the assurance cap shown in FIG. 18A;
FIG. 19A is a side elevational view of another aspect of a quick connector body;
FIG. 19B is a partial, enlarged side elevational view of a portion of a quick connector body shown in FIG. 19A;
FIG. 20A is a side elevational view of another aspect of a quick connector body;
FIG. 20B is a partial, enlarged, side elevational view of a portion of a quick connector body shown in FIG. 20A;
FIG. 21A is a perspective view of another aspect of an assurance cap shown in an assembled position on a quick connector body; and
FIG. 21B is a longitudinal cross-section of the assurance cap and quick connector body shown in FIG. 21A.

### DETAILED DESCRIPTION

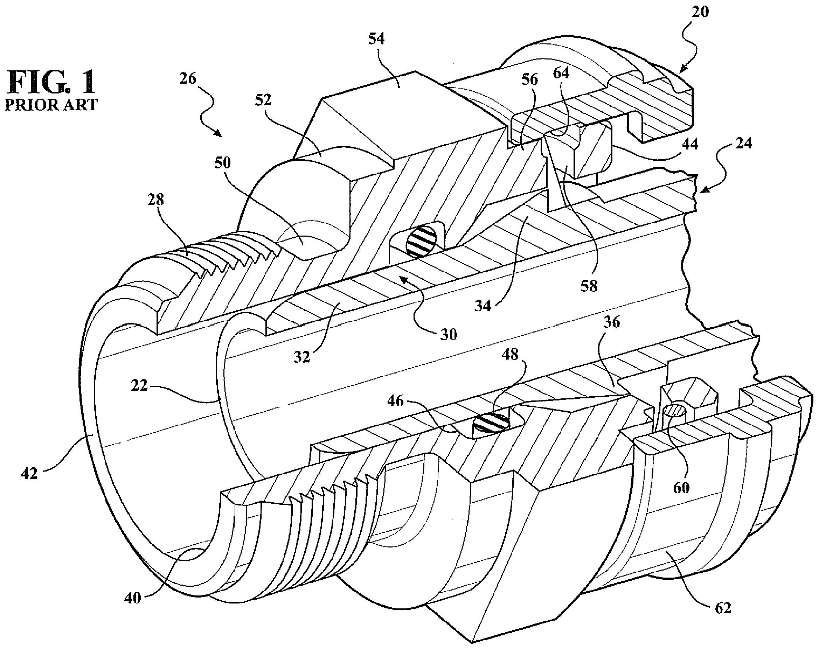

Referring now to FIG. 1, there is depicted a prior art fluid connector assembly 20 which locks a first end 22 of a tubular member 24 in a connector or fitting body 26 which is itself removably mountable in a port, such as by engagement of external threads 28 on one end of the body 26 with internal threads in the port.

The tubular member 24 is generally made of metallic materials, but rigid plastic material may also be employed. The tubular member 24 has a generally constant diameter extending from the first end 22.

A head section 30 extends from the first end 22 at a first diameter portion 32 to an outward extending endform having a tapered raised surface 34 which terminates at a large diameter end and a radially extending shoulder 36.

The connector body 26 can be, but need not necessarily be, integrally made from a single piece of metallic or plastic material. The body 26 has a through bore 40 extending from a first end 42 to an opposite second end 44. The bore 40 need not have a constant diameter between the first and second ends 42 and 44. An annular internal groove 46 is formed in the body 26 intermediate the first and second ends 42 and 44 and receives a seal member 48, such as an O-ring, for sealing the tubular member 24 to the body 26 and to prevent fluid leakage there between.

As described above, the body 26 has an externally threaded end portion 28 spaced from the first end 42. A recessed radially inward extending groove 50 can be formed in certain applications adjacent one end of the threaded end portion 28 and an annular collar 52 to receive a washer, not shown. A hexagonal portion 54 is formed adjacent the annular collar 52. A reduced diameter receiving portion 56 having a generally constant diameter extends from one end of the hexagonal portion 54 to the second end 44 of the body 26. A recessed, outward opening, annular groove 58 is formed in the receiving portion 56. The groove 58 has a constant closed inner end facing the bore 40 in the body 26 which is interrupted by one or more circumferentially spaced slots.

A retainer clip 60 is mounted in the groove 58. The retainer clip 60 can be, but need not necessarily be formed of a spring wire. The retainer clip 60 can be formed with inwardly extending protrusions which project through the slots in the groove 58, when the retainer clip 60 is in a relaxed state behind the shoulder 36 on the tubular member 24, to lock the tubular member 24 to the connector body 26.

When the first end 22 of the tubular member 24 is inserted to the receiving end 56 of the body 26, the first end 22 and the head section 30 of the tubular member 24 slide through the receiving portion 56 toward the first end 42 of the body 26. The inward extending protrusions on the retainer clip 60 seated in the groove 58 slide along the endform tapered surface 34 on the tubular member 24 causing the retainer clip 60 to expand radially outward moving the protrusions on the retainer clip 60 out of the bore 40 until the shoulder 36 of the tubular member 24 slides past one end of the retainer clip 60. At this point, the protrusions on the retainer clip 60 snap radially inward into the bore 40 behind the shoulder 36 locking the tubular member 24 in the body 26. Also, at this point during the insertion process, the outermost portions of the retainer clip 60 extend only slightly above the outer surface of the receiving end 56 of the body 26.

A prior art assurance cap 62 shown in Fig. 1, carried on the tubular member 24, can then be slid over the receiving portion 56 of the body 26. The assurance cap 62 includes an inward opening recess 64 which is positioned between the ends of the assurance cap 62 to encompass the outer portions of the retainer clip 60 extending outward from the body 26 when the retainer clip 60 is in the fully seated position in the groove 58 behind the shoulder 36 of the tubular member 24. This provides the installer with a visual indication that the tubular member 24 is fully inserted and seated in the body 26 in a fluid sealed position.

In the event that the tubular member 24 is not fully inserted into the body 26 such that it is not in the position shown in Fig. 1, the outer portions of the clip 60 will have been pushed radially outward into a radially expanded state as the clip 60 rides up along the endform tapered surface 34 of the tubular member 24. The outer tips of the outer portions of the retainer clip 60 then extend further outward beyond the outer surface of the receiving portion 56 of the body 26 in an interference position with the sliding movement of the assurance cap 62. This interference prevents the assurance cap 62 from being slid fully forward such that the recess 64 cannot snap over the clip 60. Since the assurance cap 62 is therefore not in a fully forward position, the installer has a visual indication that the tubular member 24 is not fully inserted into the body 26.

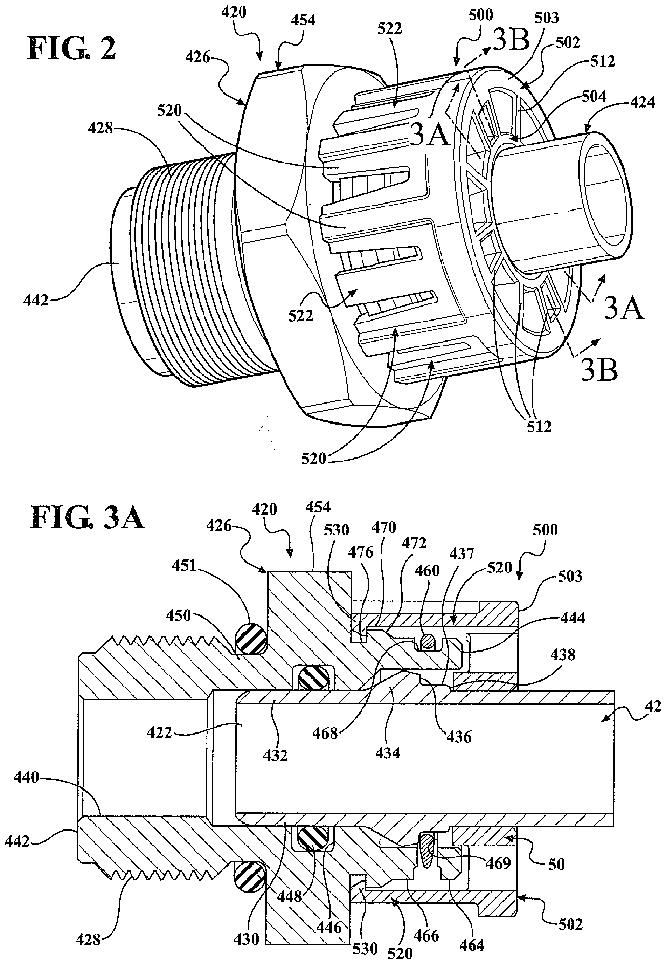

FIGS. 2-8 depicts an alternate assurance cap 500 mounted on a fluid connector assembly 420. The fluid connector assembly 420 locks one end 422 of a fluid flow tubular member or conduit 424 (hereafter "tubular member 424" at first) in a connector body 426 which is itself removably mountable in a port, such as by engagement of external thread 428 on one end of the body 426 with internal threads in the port of an external device, connector, housing, etc.

The tubular member 424 has a generally constant diameter extending from the first end 422. A head section 430 extends from the first end 422 at a first diameter 432 to an outward extending endform having a tapered radially outward extending ramp surface 434 which terminates in a large diameter end and a radially extending shoulder 436. A raised bead or collar 437 is formed on the exterior surface of the tubular member 424 and extends axially from the shoulder 436 for a short distance to an end or shoulder 438 which transitions to the constant first diameter of the overall tubular member 424.

The connector body 426 has a through bore 440 extending from a first end 442 to an opposite second end 444. The bore 440 may or may not have a constant diameter between the first and second ends 442 and 444. An annular internal groove 446 is formed in the connector body 426 intermediate the first and second ends 442 and 444 and receives a seal member, such as an O-ring 448, for sealing the tubular member 424 to the connector body 426 and to prevent fluid leakage there between.

The connector body 426 has an external threaded end portion 428 spaced from the first end 442. A radially inward extending groove 450 can be formed adjacent one end of the threaded end portion 428 for receiving an external seal member 451, such as an O-ring, for sealing the connector body 426 to the external component. A hexagonal portion 454 is formed adjacent to the recess 450.

An annular recess or groove 476 of a first diameter extends axially from one edge of the hexagonal portion 454. The recess 476 terminates in a radially outward extending shoulder at one end of an annular ring 470. The annular ring 470 transitions into a radially inward extending ramp or conical surface 472 which transitions into an axially extending surface 466 having an outer diameter larger than the inner diameter of the recess 476. The axial surface 476 transitions into a recess or groove 468. The groove 468 includes a plurality of circumferentially spaced apertures 469, with three apertures being employed, for example, for a three-protrusion retainer clip 460. The recess 468 transitions into a larger diameter end annular ring 464 which extends to the second end 444 of the body 426.

A resilient retainer clip 460 ("clip 460") mounted in the groove 468 can be, but need not necessarily be formed of a single piece of spring wire. The clip 460 can be formed with a plurality of radially inward extending protrusions which project through slots or apertures 469 in the groove 468 when the clip 460 is in a relaxed state behind the shoulder 436 on the tubular member 424 to lock the tubular member 424 to the connector body 426. At the same time, the clip 460 can be in a relaxed state prior to insertion of the tubular member 424 into the open insertion second end 444 of the connector body 426.

When the first end 422 of the tubular member 424 is inserted into the open second end 444 of the connector body 426, the first end 422 and the head section 430 of the tubular member 424 slide through the aperture in the bore 440 at the second end 442 of the connector body 426 toward the first end 442 of the connector body 426. The inwardly extending protrusions on the clip 460 slide along the tapered endform ramp surface 434 end form on the tubular 424 causing the clip 460 to expand radially outward moving the protrusions on the resilient clip 460 out of the groove 468 until the shoulder 436 on the end of the outward tapered endform ramp portion 434 of the tubular member 424 slide past one end of the clip 460. At this point, the protrusions on the clip 460 snap radially inward into the bore 440 in the connector body 426 behind the shoulder 436 locking the tubular member 424 in the connector body 426.

As shown in FIGS. 2-8, the assurance cap 500 is in the form of a one-piece body, which may be molded, machined or otherwise formed out of plastic, metal, such as aluminum, etc.

The assurance cap 500 is formed with a first outer annular ring 502 at a first end 503. A inner support ring 504, generally in the form of a cylindrical annular member, has a first end 506 generally disposed coplanar with the first end 503 of the first annular outer ring 502 and a second opposed end 508 spaced a distance by a tubular wall of the inner support ring 504 from the first end 506 of the inner support ring 504. The inner support ring 504 has a hollow interior defining a through bore 510 extending between the first and second ends 506 and 508.

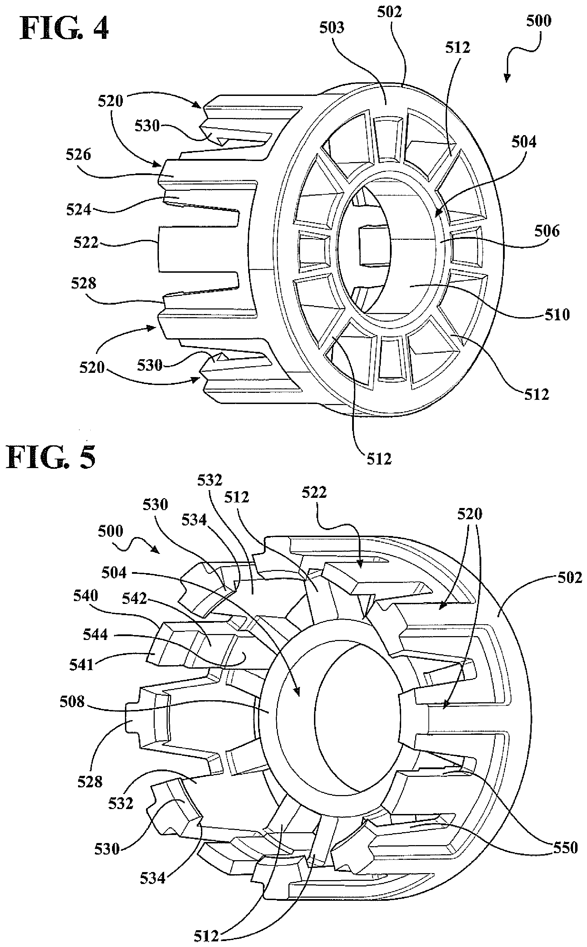

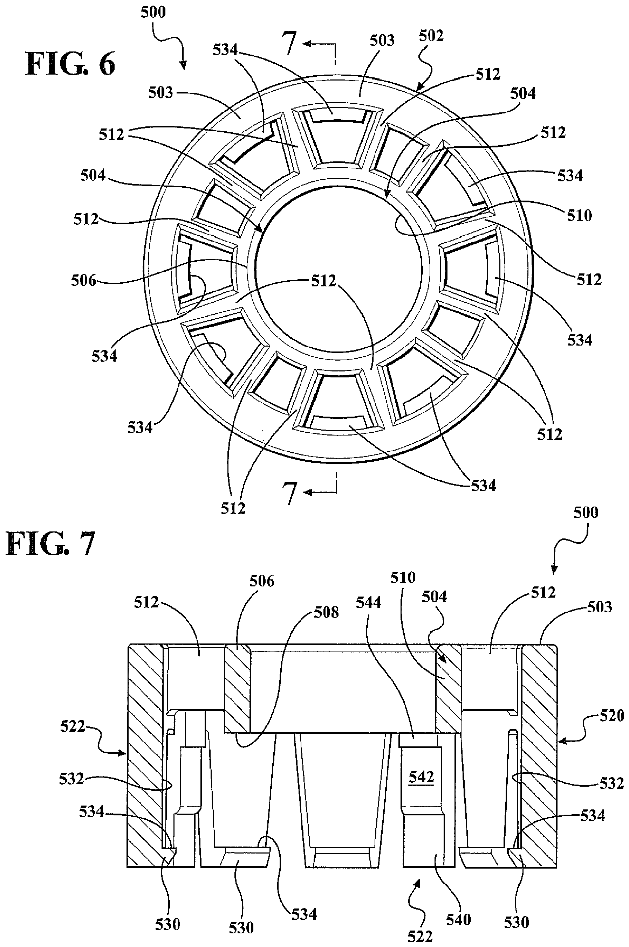

A plurality of radially extending ribs 512 form spokes extending radially outward between the inner support ring 504 and the first outer annular ring 502. The ribs 512 are circumferentially spaced about the first end of the first outer annular ring 502 and have an overall length extending from the first end 503 of the first outer annular ring 502 and the first end 506 of the inner support ring 504 for a predetermined distance less than the length of the inner support ring 504 as shown in FIGS. 5 and 7.

A plurality of primary latch fingers 520 and a plurality of stepped fingers 522 are formed on the body of the assurance cap 500 and are arranged in an annular, circumferential spaced, arrangement extending parallel to the longitudinal axis of the assurance cap 500 from the first annular ring 502 at the first end 503 of the assurance cap 500.

The primary latch fingers 520 and the stepped fingers 522 are arranged in a generally alternating arrangement around the periphery of the first end 503 of the assurance cap 500. Although the primary latch fingers 520 and the stepped fingers 522 may alternate in a circumferentially spaced side-by-side arrangement of one primary latch finger 520 located between two stepped fingers, by example only, as shown in FIGS. 4-7, two primary latch fingers 520 are arranged in a spaced side-by-side pair between single stepped fingers 522. This arrangement of two primary latch fingers 520 between two spaced stepped fingers 522 continues in a circumferential consecutive manner about the periphery of the body 503 of the assurance cap 500.

The primary latch fingers 520 are formed of an axially extending member with a generally planar, slightly arcuate leg 524 which is recessed a short distance below the outer periphery of the first outer annular ring 502. An elongated rib or structural support 526 is integrally formed on the leg 524 and projects axially from the outer peripheral edge of the annular ring 502. The rib 526 provides structural support for the leg 524 of the primary latch fingers 520 while still allowing flexure of the primary latch fingers 520 as described hereafter.

The leg 524 of each primary latch finger 520 terminates in an outer end 528. A projection 530 is formed on the outer end 528 of the primary latch fingers 520 and projects radially inward from an inner surface 532 of a primary latch finger 520 to form a shoulder 534 extending radially inward from the outer end 528 of the primary latch finger 520.

The stepped fingers 522 have an outmost first step 540 which terminates in an outer end 541 contiguous with the outer end 528 of each primary latch finger 520. A second 542 is disposed axially adjacent the first step 540 and has an inner surface disposed radially inward of the inner surface of first step 540. A third step 544 is disposed axially adjacent the second step 542 and has an inner surface disposed radially inward of the inner surface of the second step 542.

The primary latch fingers 520 and the stepped fingers 522 are circumferentially spaced apart by slots 550 which open at the first ends 528 and 541 of the primary latch fingers 520 and the stepped fingers 522, respectively. The slots 550 are generally axially aligned with the ribs 512. The slots 550 provide a degree of flexibility to the primary latch fingers 520 and the stepped fingers 522.

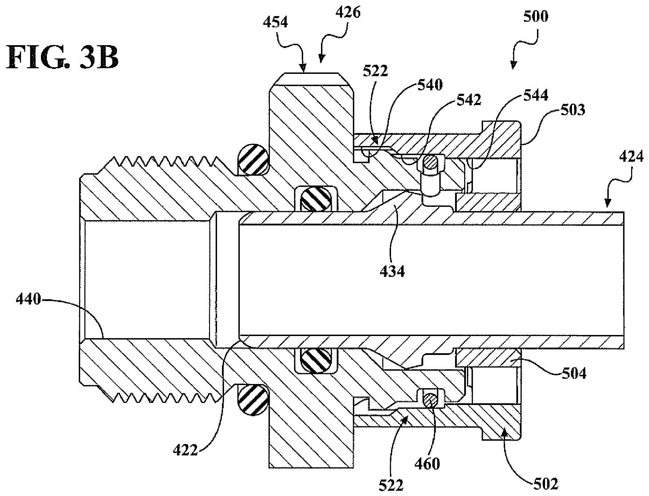

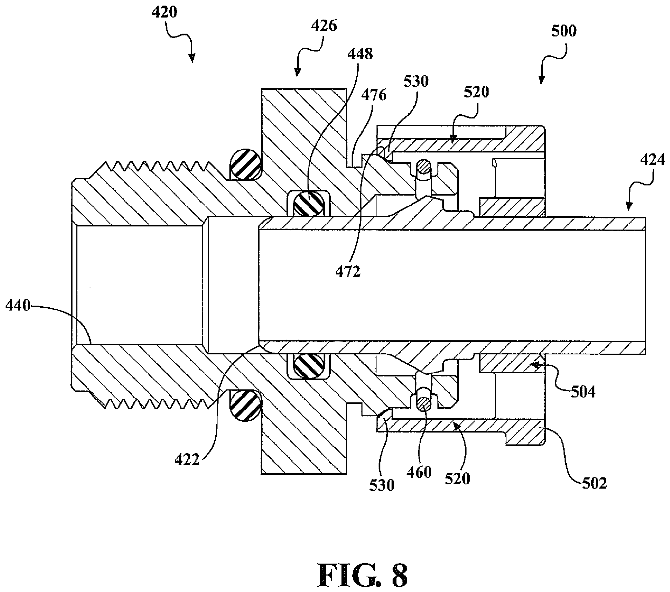

Referring to FIGS. 3B and 8, the assurance cap 500 is first installed over the tubular member 424 from either end of the tubular member 424 prior to formation of the endform 434 adjacent the first end 422 of the tubular member 424. The endform 434 slidably captures the assurance cap 500 on the tubular member 524.

Alternately, the assurance cap 500 may be inserted over the tubular member 424 from the end of the tubular member 424 opposite the first end 422 prior to the connection of the opposite end of the tubular member 424 to another component. The endform 434, in this alternate installation, can be pre-formed on the tubular member 424 prior to the mounting of the assurance cap 500 from the opposite end of the tubular member 424.

When the tubular member 424 is to be coupled to the quick connector body 426, the first end 422 of the tubular member 424 is inserted through the open first end 444 of the connector body 426. The ramp surface of the endform 434 of the tubular member 424 will engage the radially inward extending projection on the clip 460 and force the entire clip 460 radially outward until, when the first end 422 of the tubular member 424 is fully inserted into the bore 440 in the connector body 426, the projections on the clip 460 snap radially inward to their relaxed normal state behind the shoulder 436 on the endform 434 on the tubular member 424.

With the tubular member 424 locked to the connector body 426 by the clip 460, the operator can slide the assurance cap 500 toward the hex portion 454 of the quick connector body 426. The projections 530 on the outer ends 528 of the primary latch fingers 520 will engage the ramp surface 472 on the connector body 426 forcing the ends of the primary latch fingers 520 radially outward. When the assurance cap 500 is in the fully forward position, the projections 530 snap into the recess or groove 476 on the connector body 426 latching the assurance cap 500 to the quick connector body 426. At the same time, as shown in Fig. 3B, the second step 542 of each stepped finger 522 will be located circumferentially over the outer surface of the clip 460. This arrangement holds the clip 460 in its normal non-expanded state and prevents expansion of the clip 460 due to any axial separation forces exerted on the connector body 426 and/or the tubular member 424 tending to disengage or separate the connector body 426 and the tubular member 424. The stepped fingers 522 thereby act as an auxiliary latch for the assurance cap 500.

The arrangement of a pair of primary latch fingers 520, one stepped fingers 522, pair of primary latch fingers 520, etc. about the circumference of the assurance cap 500 enables one or two of the stepped fingers 522 to be in contact with the clip 560 at all annular positions of the assurance cap 500 relative to the quick connector body 426.

When the projections 530 on the primary latch fingers 520 are in the fully latched position in the groove 476 on the quick connector body 426, the inner end 508 of the inner support ring 504 will be in engagement with the shoulder 438 on the raised bead or flange 437 on the tubular member 422. This serves as a secondary latch function securing the assurance cap 500 to the connector body 426 and the tubular member 424 in the fully inserted position of the tubular member 424 in the connector body 426 between the engaged projections 530 of the primary latch fingers 520 in the groove 476 and the engaged inner end 508 of the inner support ring 504 with the flange 437 on the tubular member 422.

Referring briefly to FIG. 8, the primary function of the assurance cap 500 is to insure that the tubular member 424 is fully inserted into the quick connector body 426 so that the tubular member 424 can be latched in place by the clip 460. During the insertion of the tubular member 424 into the bore 440 in the quick connector body 426, the installer may feel resistant to forward insertion movement of the tubular member 424 into the bore 440 when, for example, the first end 422 of the tubular member 424 contacts the O-ring 448 in the interior of the quick connector body 426. This may give a false full insertion indication to the installer. However, the assurance cap 500 is configured so that at all non-fully inserted position of the tubular member 424 relative to the quick connector body 426, the projections 530 on the ends 528 of the primary latch fingers 520 will not be fully latched in the recess or groove 476 in the connector body 426; but rather, will be in engagement with the ramp surface 472 on the radial outer surface 470 on the connector body as shown in Fig. 8. This prevents latching of the primary latch fingers 520 to the quick connector body 426. A non-fixed position of the body 426 or a slight pull-out movement by the installer exerted on the assurance cap 500 moving the assurance cap 500 away from the body 426 will provide an indication of non-latching of the assurance cap 500 to the quick connector body 426.

At the same time, the assurance cap 500, due to the rib support structure of the primary latch fingers 520 and the number of such primary latch fingers 520 on the assurance cap 500 and the primary latching of the projections 530 of the primary latch fingers 520 in the groove 476 of the quick connector body 426 and the engagement of the inner end 508 of the inner support ring 504 with the shoulder 438 on the flange or bead 436 on the tubular member 424, provides a resistance force sufficient to prevent axial separation of the tubular member 424 from the quick connector body 426 despite any axial separation forces acting on the quick connector body and the tubular member 424.

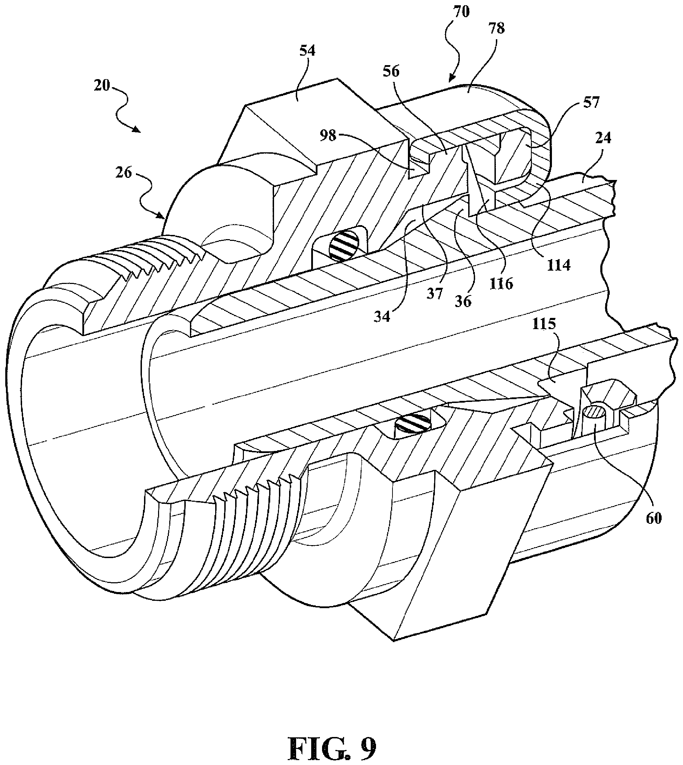

FIG. 9 depicts the fluid connector assembly 20 of Fig. 1 which is used to sealingly lock the tubular member 24 to the body 26. However, the fluid connector assembly 20 in Fig. 9 includes a novel assurance cap 70 which provides assurance of a full insertion of the tubular member 24 into the body 26 and, at the same time, provides secondary latches to hold the assurance cap 70 on the body 26 and to provide an additional latching force against disengagement of the tubular member 24 from the body 26.

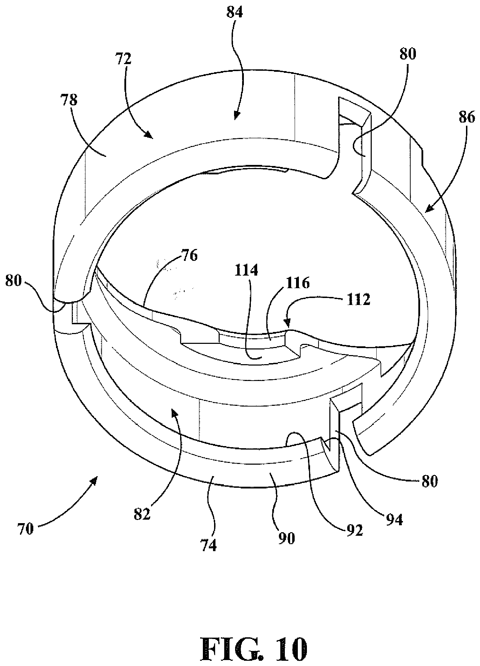

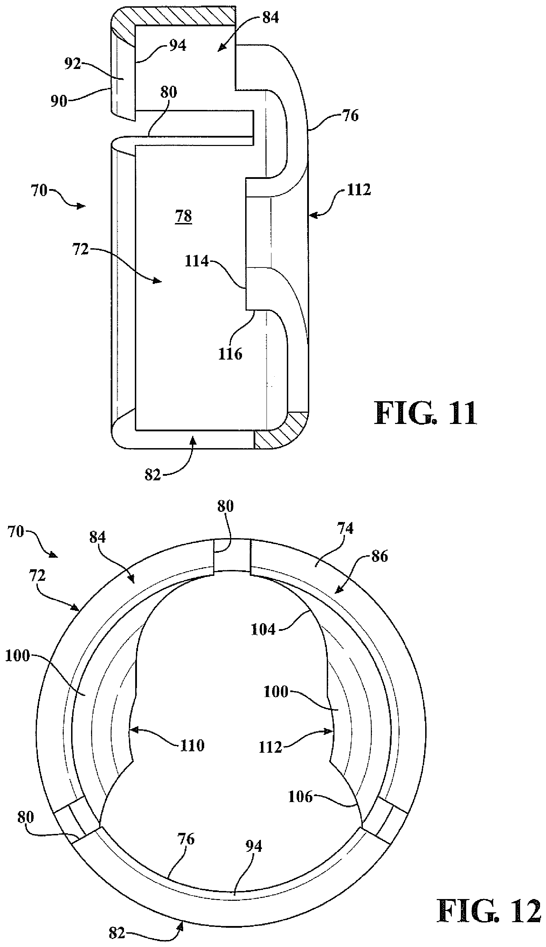

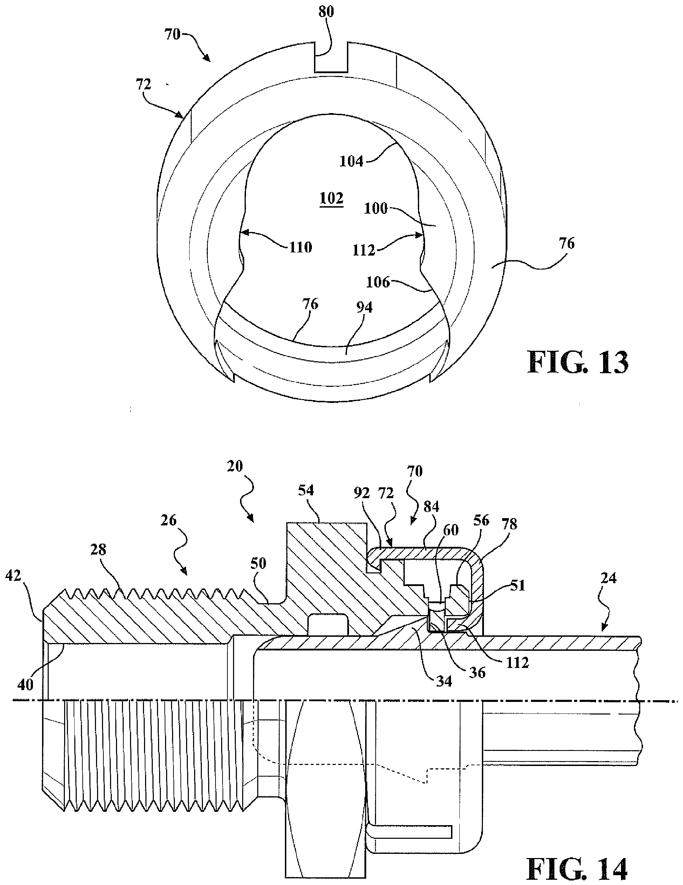

The assurance cap 70, shown in an assembled position in Fig. 9 and in detailed views in FIGS. 10-14 and FIGS. 15A-15D, can be formed of a material having a suitable strength, such as high strength plastic, or a metal, such as stainless steel, aluminum, etc.

In this aspect, the assurance cap 70 is in the form of an annular body 72 having a first end 74, an opposed second end 76, and an intermediate sidewall 78 extending between the first and second ends 74 and 76. At least one or a plurality of slots 80, with three slots 80 shown by example, are formed through the first end 74 and a portion of the sidewall 78 to separate the sidewall 78 into a plurality of fingers with three fingers 82, 84 and 86 being shown by example in FIGS. 10-14. The slots 80 and the intervening fingers 82, 84, and 86 provide flexibility to the assurance cap 70 allowing the first end 74 of the assurance cap 70 to flex radially outward over the outer surface of the receiving portion 56 of the body 26 until the assurance cap 70 has reached its fully forward position of movement, as described hereafter.

The first end 74 of each of the fingers 82, 84 and 86 has a rounded over end portion 90 which terminates in a radially inward extending edge 92 forming a shoulder 94. The shoulder 94 is configured to snap over an engage a mating shoulder 96 formed along one side of an open ended annular groove 98 formed in the body 26 between the hexagonal portion 54 and the receiving portion 56 of the body 26. The shoulders 94 on each of the three fingers 82, 84, and 86, which extend over substantially the entire circumference of the assurance cap 70, provide a secure circumferential secondary latching force to secure the assurance cap 70 on the body 26 as well as providing additional latching force to resist separation of the tubular member 24 from the body 26.

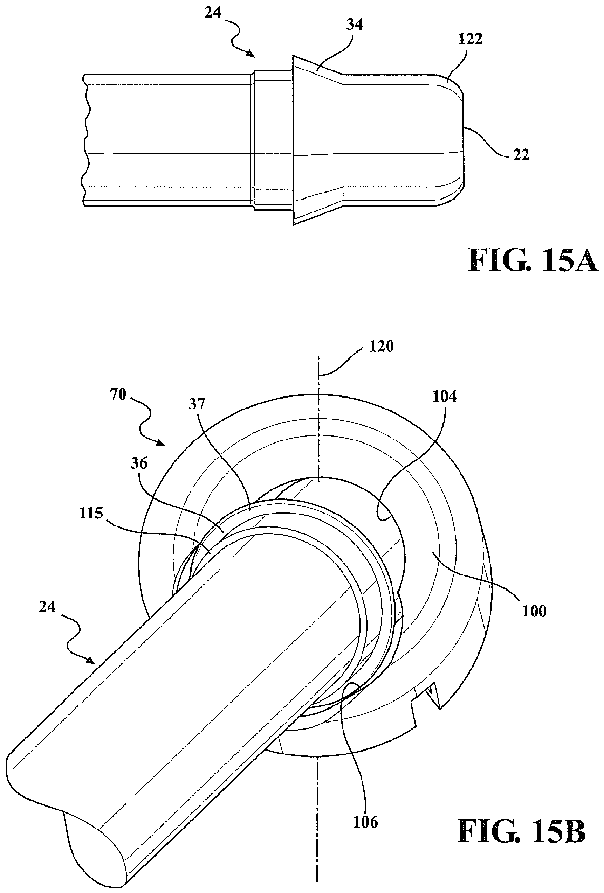

The second end 76 of the assurance cap 70 has a partially closed, irregularly shaped endwall 100 which includes a keyhole shaped aperture 102 having a reduced diameter or width first end portion 104 and a larger diameter second end portion 106. The walls forming the first end portion 104 and the second end portion 106 are generally arcuate to enable the assurance cap 70 to be mounted over the first end 22 of the tubular member 24 as described hereafter and shown in FIGS. 15A-15D.

A pair of diametrically opposed, inward extending fingers 110 and 112 are provided generally centrally in the endwall 100 on the second end 76 of the assurance cap 70. The fingers 110 and 112, with only the finger 112 shown in FIG. 10, have an inward curled wall 114 terminating in an inner edge wall 116. As shown in FIG. 9, the wall 114 is generally parallel to the intermediate sidewall 78 of the assurance cap 70, with the inner edge wall 116 facing, but spaced from the resilient clip 60.

The edge walls 114 will rest on a raised bead 115 on the tubular member 24 extending from the shoulder 36 at the fully inserted position of the tubular member 24 in the body 26 latching the assurance cap 70 on the body 26 between the shoulders 94 on the fingers 82, 84 and 86 and the fingers 110 and 112.

The fingers 110 and 112 provide an additional engagement or latching function for the assurance cap 70 on the body 20 when the assurance cap 70 is in the full forward, latched position shown in FIG. 9.

FIGS. 15A-15D depict the orientation of the tubular member 24 and the assurance cap 70 for mounting of the assurance cap 70 over the first end 22 of the tubular member 24 and the tapered surface 34. At the time of assembly, the assurance cap 70 is oriented as shown in FIG. 15B with a longitudinal axis 120 extending through the keyhole shaped aperture 102 oriented at an angle along axis line 122 of the tubular member 24 in FIG. 15A to bring the larger diameter or width second end portion 106 of the keyhole shaped aperture 102 over the large diameter end 37 of the endform tapered surface 34 of the tubular member 24.

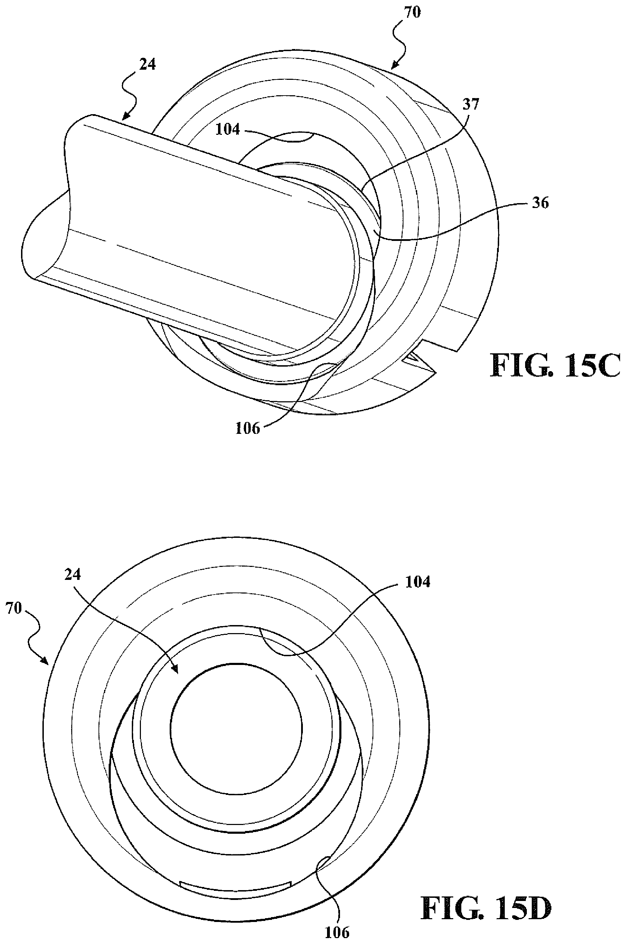

The other end of the assurance cap 70 can then be pivoted in the direction of arrow 124 in FIG. 15C to move the entire keyhole shaped aperture 102 over the large diameter end 37 of the endform tapered surface 34 of the tubular member 24 until the first end 74 of the assurance cap 70 clears the large diameter end 37 of the endform tapered surface 34 of the tubular member 24.

After the large diameter end 37 of the endform tapered surface 36 of the tubular member 24 has been urged past the inner edges of the large diameter end portion 106 of the keyhole aperture 102 in the assurance cap 70, the assurance cap 70 can be tilted upward toward a perpendicular orientation with respect to a longitudinal axis of the tubular member 24 and moved longitudinally along the tubular member 24 until the inner edges of the keyhole shaped aperture 102 are completely past the large diameter end 37 of the tapered surface 34 of the tubular member 24, as shown in FIG. 15C. The assurance cap 70 can then be urged or slid into the smaller diameter first end portion 104 of the keyhole shaped aperture 102 to center the assurance cap 70 with respect to the tubular member 24 as shown in FIG. 15D.

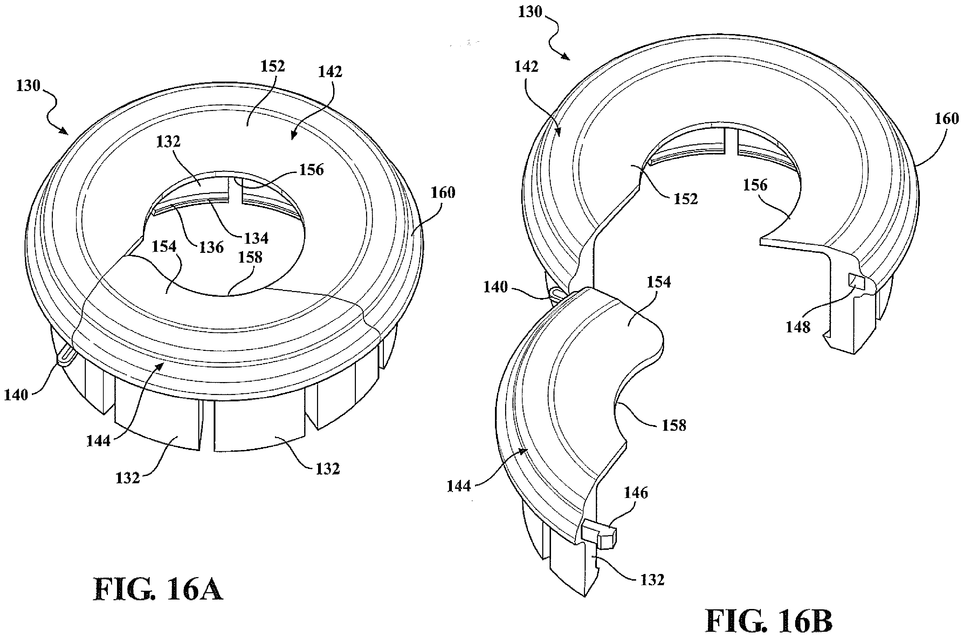

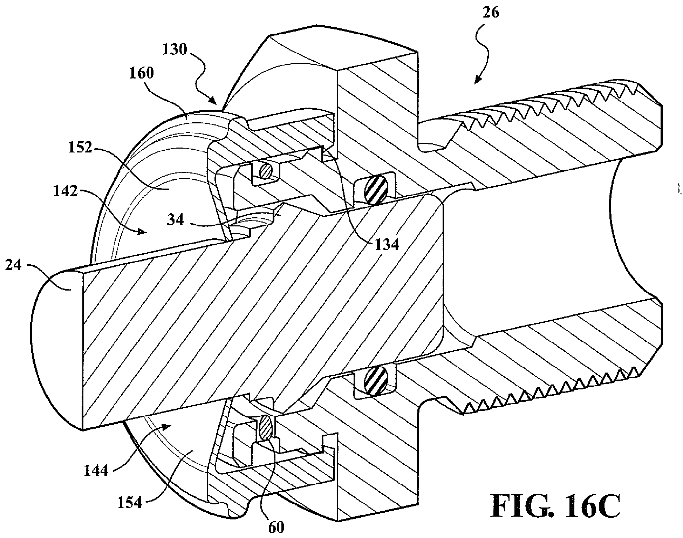

Referring now to FIGS. 16A, 16B and 16C, there is depicted another aspect of an assurance cap 130 which functions in the same manner as the assurance cap 70 described above and shown in FIGS. 9-15D. The assurance cap 130 has a plurality of longitudinally extending, spaced fingers 132, each with a radially inward extending edge 134 terminating in a shoulder 136 configured to latchably engage the edge 96 of the groove 98 in the body 20 to secure the assurance cap 130 in position at its forward most position of movement relative to the tubular member 24 and the body 26. It should be noted that instead of three longer circumferential length fingers 82, 84, and 86, the fingers 132 in the assurance cap 130 are smaller in length and greater in number to provide a greater degree of flexibility to enable the assurance cap 130 to be easily slid over the raised end of the receiving portion 56 of the body 26.

The assurance cap 130 has a body with a hinge 140 interconnecting a first body section 142 with a second body section 144. The first and second body sections 142 and 144 are pivotally movable with respect to each other about the hinge 140 from an open position shown in FIG. 16B which enables the assurance cap 130 to be mounted over the tubular member 24 to a closed position forming a continuous body about the tubular member 24 by pivotal movement of the first and second body sections 142 and 144 toward each other about the hinge 140 until a latch finger 146 on the second body section 144 engages a latch recess 148 in the opposite first body section 142 as shown in FIG. 16B. The engagement of the latch finger 146 in the latch recess 148 locks the first and second body sections 142 and 144 of the assurance cap 130 into a continuous body encircling the tubular member 24.

It should also be noted that the second end of the assurance cap 130 has a radially inward extending skirt formed of a first skirt portion 152 on the first body section 142 of the assurance cap 130 and a second skirt portion 154 on the second body section 144 of the assurance cap 130. Arcuate inner edges 156 and 158 respectively on the first and second skirt portions 152 and 154 form a continuous annular edge configured to engage or be slightly spaced from the outer surface of the tubular member 24 when the assurance cap 130 is slid to its forward most position over the tubular member 24 and latched to the body 26 as shown in FIG. 16C. The first and second skirt portions 152 and 154 also act to center the assurance cap 130 about the tubular member 24 during the forward sliding movement of the assurance cap 130.

A raised annular rib 160 is formed on the outer surface of the assurance cap 130 between the first and second ends to act as a gripping surface to facilitate movement of the assurance cap 130 from a rest position about the tubular member 24 to its forward position shown in FIG. 16C.

The two-part hinged cap described above and shown in FIGS. 16A-16B may be applied to any of the other assurance caps described herein. Particularly, the assurance cap 500 described above and shown in FIGS. 2-8 can be split into two hinged body section by a slit along one of the slots 550, the annular ring 502 at the first end 503 of the assurance cap 500 and the inner support ring 504. This hinged arrangement for the assurance cap 500 enables the assurance cap 500 to be snapped around the tubular member 424 after the endform 434 has been formed on the tubular member 424.

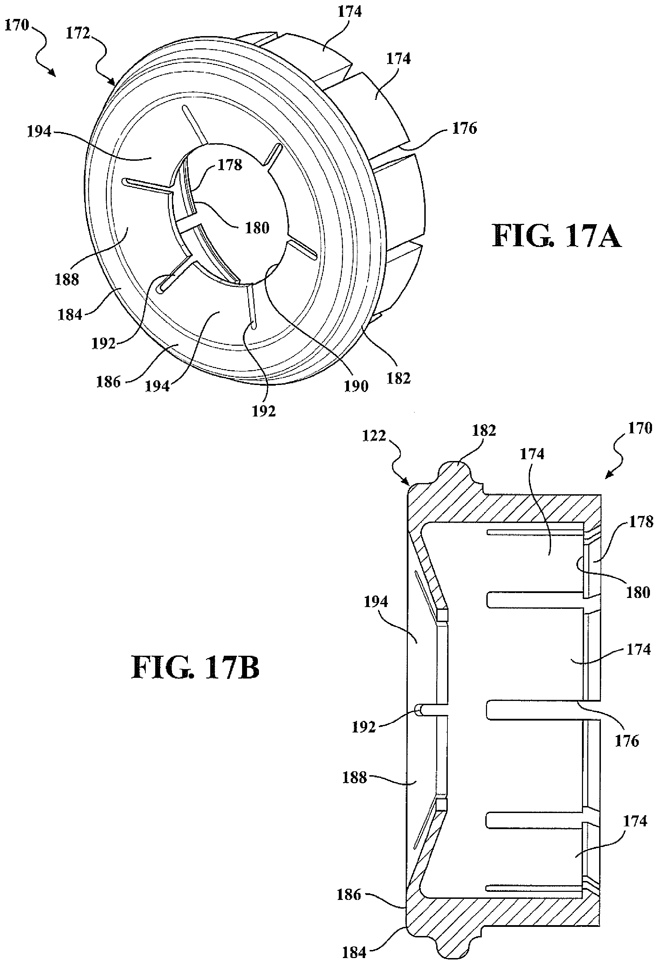

FIGS. 17A and 17B show another modification in an assurance cap 170. In this aspect, the assurance cap 170 has a one piece, unitary, close annular, one-piece cylindrical-shaped body 172. The first end of the body 172 has a plurality of fingers 174 spaced apart by longitudinally extending slots 176. Inward extending edges 178 terminating in a radially inward extending shoulder 180 extend from one end of each of the fingers 174 to engage the edge 96 of the groove 98 in the body 26 to latch the assurance cap 170 to the body 26 in a forward most position of movement indicating full insertion of the tubular member 24 in the body 26.

An annular radially outward extending ring 182 is formed intermediate the first end and the opposed second end of the body 172 to act as a gripping surface to facilitate movement of the assurance cap 170.

The second end 184 of the body 172 includes a continuous annular outer ring 186 and a radially inward conical-shaped skirt 188 extending from the outer ring 186 to an inner edge 190. A plurality of radially extending slots 192 are formed in the skirt 188 and extend from the inner edge 190 partially through the radial extent of the skirt 188. The slots 192 divide the skirt 188 into a plurality of radially inward, conically tapered fingers 194. The slots 192 provide flexibility to the fingers 194 to enable the assurance cap 170 to be forcibly urged over the large diameter end portion 37 of the tapered surface 34 on the tubular member 24 to mount the assurance cap 170 on the tubular member 24 prior to insertion of the tubular member 24 into the body 26.

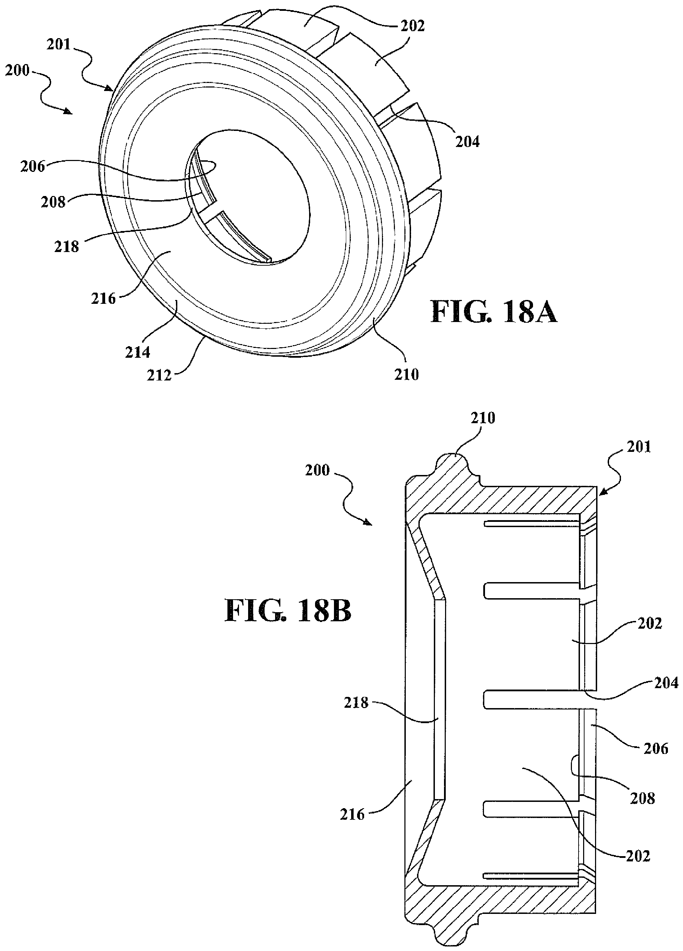

FIGS. 18A and 18B depict another aspect of an assurance cap 200 which is substantially similar to the assurance cap 170 in that the assurance cap 200 is formed of a continuous one-piece body 201 having a plurality of fingers 202 at a first end spaced apart by slots 204. The fingers 202 terminate in an inward extending edge 206 having an inner shoulder 208 to engage the edge 96 in the groove 98 of the body 26 when the assurance cap 200 is moved to its forward position relative to the body 26 indicating full insertion of the tubular member 24 in the body 26.

A radially outward extending rib 210 is formed in the body 201 intermediate the first and second ends. The second end 212 of the body 201 is formed as an annular ring 214 from which a conically shaped radially inward extending skirt 216 extends to an inner edge 218 defining an aperture the same size or slightly larger than the outer diameter of the constant diameter portion of the tubular member 24.

In this aspect of the assurance cap 200, the skirt 216 does not include any slots. This aspect has the assurance cap 200 installed on the tubular member 24 before the ramp or endform is formed.

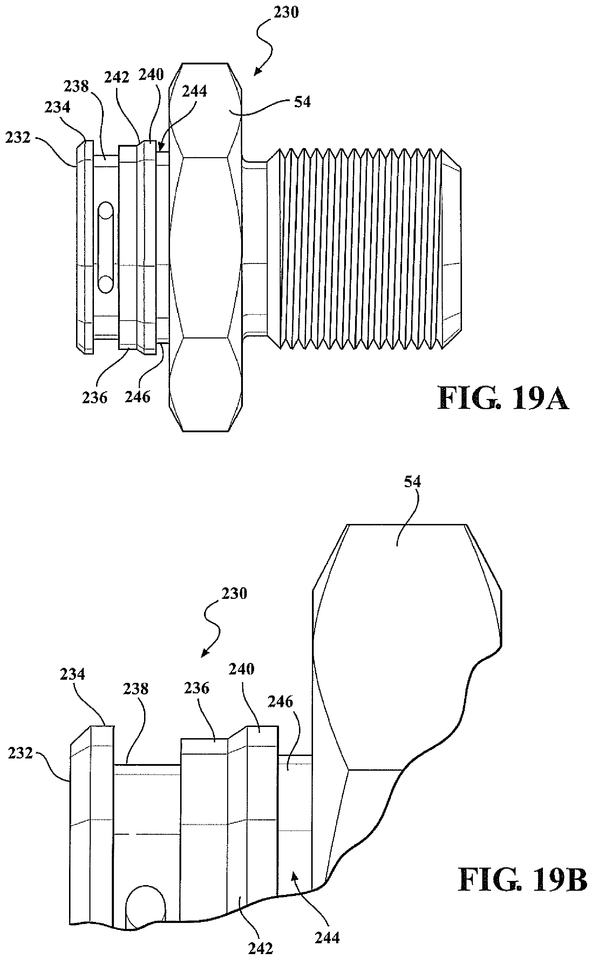

Referring now to FIGS. 19A and 19B, there is depicted another aspect of a body 230, which includes variations from the body 26 shown in FIG. 9. As most of the body 230 is identically constructed as the body 26, only variations between the body 230 and the body 26 will be described in detail.

As shown in the body 26 depicted in FIG. 9, the receiving portion 56 extending from the end 57 of the fitting body 26 has a constant outer diameter. This allows the radially inward turned edges 92 of the fingers 80, 82, and 84 on the first end 74 of the assurance cap 70 to snap into the recessed groove 98 in the body 26.

In the body 230 depicted in FIGS. 19A and 19B, the receiving portion extending from a first end 232 of the body 230 has a first diameter end portion 234 and a second smaller diameter end portion 236 disposed on opposite sides of the groove 238 which receives the resilient clip 60. A raised intermediate annular ring 240 is formed adjacent to the second end portion 236 and includes a radially outward, extending conically shaped, tapered endwall 242 extending from the second end portion 236. The outer diameter of the ring 240 is larger than the diameters of the first and second end portions 234 and 236 of the receiving portion of the body 230.

A recessed groove 244 is formed between the annular ring 240 and the hexagonal shaped portion 54 of the body 230. The inner surface 246 of the groove 244 has a diameter smaller than the diameter of the second end portion 236 of the insertion portion of the body 230 to define a recess for receiving the latch portions of the fingers of the assurance cap in the fully inserted position relative to the body 26.

During such forward sliding movement of any of the assurance caps described above, the radially inward turned fingers of the assurance cap flex outward over the tapered endwall 242 and then along the outer surface of the ring 240 before snapping in latched engagement with the groove 244 to provide the secondary latch function for the assurance cap.

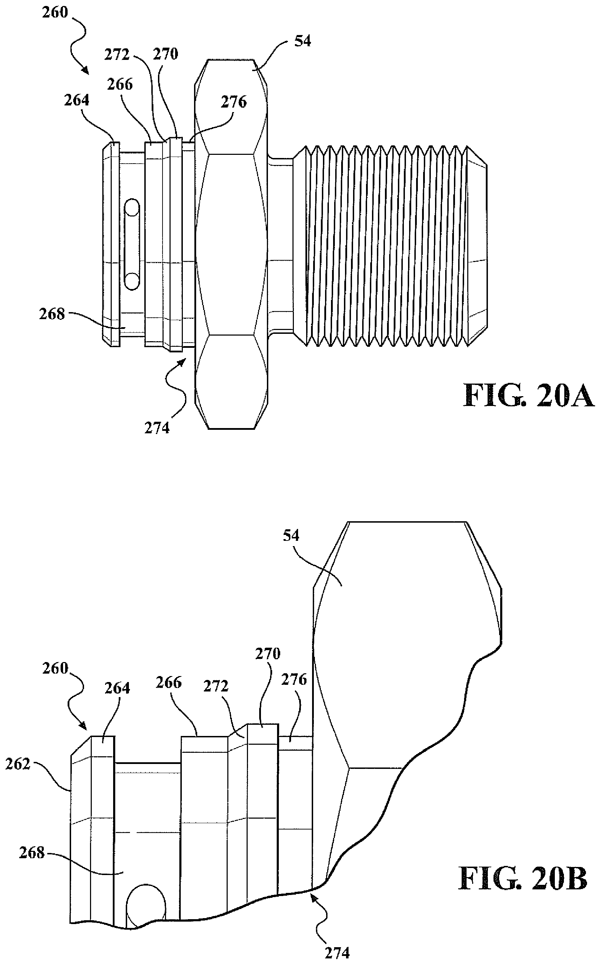

In another variation of a body 260 shown in FIGS. 20A and 20B, again the body 260 is substantially the same as the body 26 and only variations there between will be described in detail.

Like the body 230 shown in FIGS. 19A and 19B, the body 260 has a first end 262 from which extends a first end portion 264 of the receiving portion at a first diameter. The receiving portion includes a second end portion 266, also at the same diameter to define a recess 268 for the resilient clip 60.

The body 260 also includes a raised annular ring 270 having an outer diameter greater than the first diameters of the first and second end portions 264 and 266. A radially outward, conical shaped tapered surface 272 extends from the second end portion 266 to the raised annular ring 270. A recess or groove 274 is formed between the raised annular ring 270 and the hexed shaped portion of the body 260. The inner surface 276 of the groove 274 is spaced at the same first diameter of the first and second end portions 264 and 266 of the receiving portion of the body 260.

In this aspect, the annular ring 270 forms a raised outermost portion of the receiving portion of the body 260. The difference between the outer diameter of the annular ring 270 and the inner surface 276 of the adjacent groove 274 requires that the fingers on the assurance cap can be flexed outward over the raised outer edge of the annular ring 270 before snapping over the outer edge of the annular ring 270 into the groove 274.

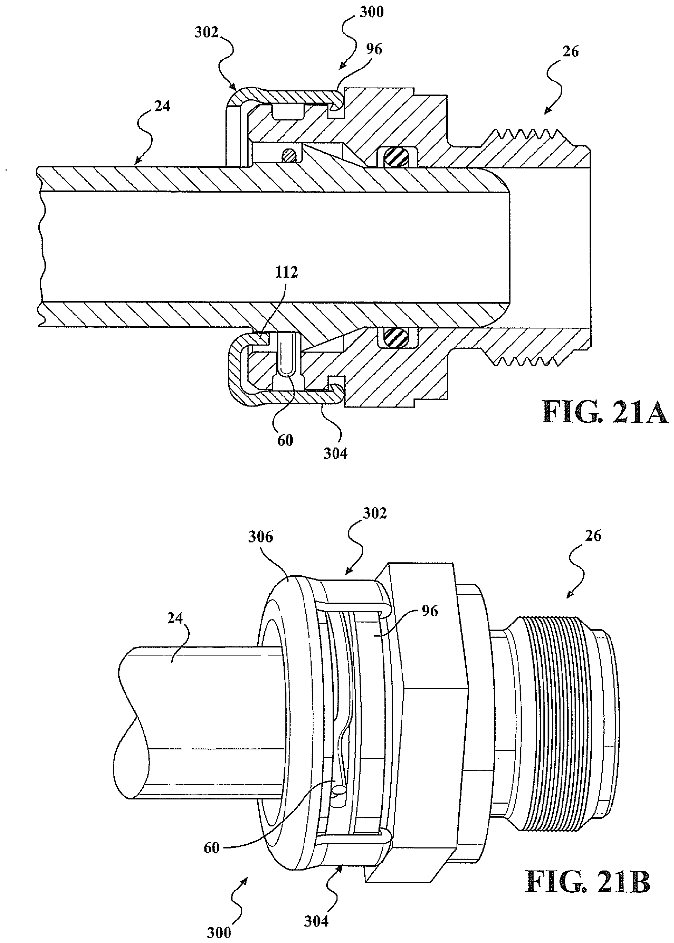

Referring now to FIGS. 21A and 21B, there is depicted another variation in the construction of an assurance cap 300. In this aspect, the assurance cap 300 is similar to the assurance cap 70 described above and shown in FIGS. 2-8D except that the assurance cap 300 has two small latch fingers 302 and 304 extending from an intermediate annular portion 306. The fingers 302 and 304, which can be provided in any number, such as two, three, or more fingers, are configured more as standalone latch fingers rather than the closely separated fingers 82, 84 and 86 on the assurance cap 70, which have a much longer circumferential extent.

The latch fingers 302 and 304 are constructed similarly to the latch fingers 82, 84 and 86 in the assurance cap 70 and are designed to snap into and latch in the groove 98 on the body 26 when the tubular member 24 is fully inserted into the body 26.

The fingers 302 and 304 are spaced apart about the circumference of the assurance cap 300 in an angular orientation designed to intercept the raised portions of the resilient clip which would extend outward beyond the upper extent of the insertion portion 56 of the body 26 from the groove 98 when the tubular member 24 is not fully inserted in the body 26. Thus, for example, in a two finger construction shown in FIGS. 21A and 21B, the two fingers 302 and 304 are spaced less than 180° apart to one side of the assurance cap 300 and greater than 180° apart on the other side of the assurance cap 300.

As shown in FIG. 21B, the fingers 302 and 304 are circumferentially spaced so that at least one of the fingers 302 or 304 is in a interference position with the retainer clip 60 so as to strike a raised portion of the retainer clip 60 extending out of the groove 68 in the body 26 to prevent full movement of the assurance cap 300 to the fully forward latched position. This assures that the assurance cap 300 functions in its intended manner regardless of its angular orientation with respect to the protrusions and outer portions of the retainer clip 60 in the groove 58.

## Claims

1. A fluid connector assembly comprising:
a tubular member (424) having an endform spaced from a first insertion end (422) defining a radially disposed shoulder (436);
a connector body (426) having a bore (440) with one open end receiving the tubular member (424);
a retainer clip (460) carried on the connector body (426) and extending partially into the bore (440) to engage the shoulder (436) of the tubular member (424) to lock the tubular member (424) in the connector body (426) when the first insertion end (422) of the tubular member (424) is fully inserted into the bore (440) in the connector body (426);
an assurance cap (500) slidably mounted relative to the tubular member (424), the assurance cap defining an annular body with a plurality of primary latch fingers (520) with end projections (530) configured for latching in a recessed groove (476) in connector body (426) spaced from one end of the connector body to latch the assurance cap (500) on the connector body only when the tubular member (424) is fully inserted into the connector body; and
a secondary latch (508,522) carried on the assurance cap body for engaging one of the retainer clip (460) and the tubular member (424) to secondarily latch the assurance cap to the tubular member and only when the tubular member is fully inserted into the bore in the connector body (426).

2. The connector assembly of claim 1 wherein the primary latch fingers (520) comprise a plurality of circumferentially spaced primary latch fingers extending from a first end of the assurance cap body.

3. The connector assembly of claim 1 wherein the primary latch fingers (520) comprise:
a radially inward projection formed on a flexible end of the primary latch fingers; and
a radially outward opening groove formed in the connector, spaced from the one end of the connector body, the groove and the projections on the primary latch fingers engageable to primarily latch the assurance cap to the connector body only when the tubular member is fully inserted into the bore in the connector body.

4. The connector assembly of claim 1 further wherein the secondary latch comprises:
an inner support ring (504) fixed in the assurance cap body radially inward of the primary latch fingers;
the inner support ring having a through bore (510) through which the tubular member extends; and
the inner support ring having an inner end (508) positioned to engage a surface (438) on the tubular member (424) to provide a secondary latch between the assurance cap body and the tubular member when the tubular member is fully inserted into the bore in the connector body.

5. The connector assembly of claim 4 wherein: the surface (438) on the tubular member is axially spaced from the endform and defines a raised surface on the tubular member.

6. The connector assembly of claim 1 wherein the secondary latch comprises:
a plurality of stepped fingers (522) circumferentially spaced between the primary latch fingers (520); and
each of the stepped fingers having an inner surface with at least one step configured to overlay a radially outward portion of the retainer clip (460) when the assurance cap is latched to the body of the quick connector and the tubular member to resist radially outward expansion of the retainer clip.

7. The connector assembly of claim 6 wherein:
the primary latch fingers (520) further include a plurality of circumferentially spaced primary latch fingers extending from a first end of the assurance cap body; and
one stepped finger (522) disposed circumferentially intermediate at least one primary latch finger.

8. The connector assembly of claim 7 further comprising:
the plurality of primary latch fingers (520) arranged in circumferentially spaced pairs of adjacent side-by-side arranged primary latch fingers; and
one stepped finger interposed between each pair of primary latch fingers.

9. The connector assembly of claim 1 wherein:
a raised portion of the connector body (426) includes an outward extending tapered portion (472) extending from an outer diameter of the connector body to an outer surface (466) of the raised portion on the connector body.

10. The connector assembly of claim 1 further comprising:
a raised portion formed on a receiving end of the connector body (426) having an outer diameter substantially equal to an outer diameter of the receiving end of the connector body extending from the receiving end of the connector body, an annular recess (476) positioned adjacent to the raised portion for receiving the latch fingers of the assurance cap in a latch position of the assurance cap on the connector body.

11. The connector assembly of claim 1 wherein:
the assurance cap body has pivotally connected first and second sections lockable in a continuous annular body about the tubular member (424); and
the first and second sections of the assurance cap body being pivotally movable relative to a pivotally connected end of the first and second sections to allow mounting of the assurance cap body around the tubular member.

12. The connector assembly of claim 1 wherein the secondary latch comprises:
an inner support ring (504) fixed in the assurance cap body radially inward of the primary latch fingers (520);
the inner support ring having a through bore (510) through which the tubular member extends;
the inner support ring having an inner end (508) positioned to engage a surface (438) on the tubular member to provide a secondary latch between the assurance cap body and the tubular member when the tubular member is fully inserted into the bore in the connector body;
the surface on the tubular member is axially spaced from the endform and defines a raised surface on the tubular member;
a plurality of stepped fingers (522) circumferentially spaced between the primary latch fingers; and
each of the stepped fingers having an inner stepped surface configured to overlay a radially outward portion of the retainer clip when the assurance cap is latched to the quick connector body and the tubular member to resist radially outward expansion of the retainer clip.

13. The connector assembly of claim 12 wherein:
the primary latch fingers (520) further include a plurality of circumferentially spaced primary latch fingers extending from a first end of the assurance cap body; and
one stepped finger (522) disposed intermediate at least one primary latched finger.

14. The connector assembly of claim 13 further comprising:
the plurality of primary latch fingers (520) arranged in circumferentially spaced pairs of adjacent side-by-side arranged primary latch fingers; and
one stepped finger (522) interposed between each pair of primary latch fingers.

## Patentansprüche

1. Fluidanschlussanordnung mit
einem Rohrelement (424), das eine eine radial angeordnete Schulter (436) definierende Endform in Abstand von einem ersten Einführende (422) aufweist,
einem Anschlusskörper (426) mit einer Bohrung (440), die ein das Rohrelement aufnehmendes offenes Ende hat,
einem an dem Anschlusskörper (426) angebrachten Halteclip (460), der teilweise in die Bohrung (440) hinein verläuft und an der Schulter (436) des Rohrelements (424) anliegt, um das Rohrelement (424) in dem Anschlusskörper (426) zu verriegeln, wenn das erste Einführende (422) des Rohrelements (424) vollständig in die Bohrung (440) in dem Anschlusskörper (426) eingeführt ist,
einer relativ zu dem Rohrelement (424) verschiebbar montierten Sicherungskappe (500), die einen Ringkörper mit mehreren primären Verriegelungsfingern (520) definiert, die Endvorsprünge (530) zum Verriegeln in eine vertiefte Nut (476) in dem Anschlusskörper (426) aufweist, wobei Abstand von einem Ende des Anschlusskörpers haben, um die Sicherungskappe an dem Anschlusskörper nur dann zu verriegeln, wenn das Rohrelement (424) vollständig in den Anschlusskörper (426) eingeführt ist, und
einer am Körper der Sicherungskappe angebrachten Sekundärverriegelung (508, 522) zum Eingriff mit dem Halteclip (460) oder dem Rohrelement (424) zum sekundären Verriegeln der Sicherungskappe an dem Rohrelement nur dann, wenn das Rohrelement vollständig in den Anschlusskörper (426) eingeführt ist.

2. Anschlussanordnung nach Anspruch 1, wobei die primären Verriegelungsfinger mehrere über den Umfang verteilte primären Verriegelungsfinger (520) aufweisen, die von einem ersten Ende des Körpers der Sicherungskappe ausgehen.

3. Anschlussanordnung nach Anspruch 1, wobei die primären Verriegelungsfinger (520) aufweisen:
einen an einem flexiblen Ende der primären Verriegelungsfinger radial nach innen weisenden Vorsprung,
eine in dem Anschlusskörper in Abstand von dem ersten Ende des Anschlusskörpers ausgebildete, radial auswärts offene Nut, die mit den Vorsprüngen an den primären Verriegelungsfingern zusammenarbeiten, um die Sicherungskappe primär an dem Anschlusskörper nur dann zu verriegeln, wenn das Rohrelement vollständig in die Bohrung in dem Anschlusskörper eingeführt ist.

4. Anschlussanordnung nach Anspruch 1, wobei die Sekundärverriegelung aufweist;
einen in der Sicherungskappe radial innerhalb der primären Verriegelungsfinger befestigten inneren Tragring (504),
wobei der innere Tragring eine von dem Rohrelement durchsetzte Durchgangbohrung (510) aufweist, und
wobei der innere Tragring ein inneres End (508) hat, das so angeordnet ist, dass an einer Fläche (438) des Rohrelements (424) anliegt, um eine Sekundärverriegelung zwischen dem Körper der Sicherungskappe und dem Rohrelement zu bilden, wenn das Rohrelement vollständig in die Bohrung in dem Anschlusskörper eingeführt ist.

5. Anschlussanordnung nach Anspruch 1, wobei die Fläche (438) an dem Rohrelement einen axialen Anstand von der Endform hat und an dem Rohrelement eine erhabene Fläche definiert.

6. Anschlussanordnung nach Anspruch 1, wobei die Sekundärverriegelung aufweist;
mehrere über den Umfang verteilte gestufte Finger (522) zwischen den primären Verriegelungsfingern (520),'und
wobei jeder der gestuften Finger eine Innenfläche mit mindestens einer Stufe hat, die so gestaltet ist, dass einen radial äußeren Teil des Halteclips (460) überlagert, wenn die Sicherungskappe mit dem Körper des Schnellanschlusses und dem Rohrelement verriegelt ist, um eine Ausweitung des Halteclips nach außen zu verhindern.

7. Anschlussanordnung nach Anspruch 6, wobei
die primären Verriegelungsfinger (520) ferner mehrere über den Umfang verteilte primäre Verriegelungsfinger aufweisen, die von einem ersten Ende des Körper der Sicherungskappe ausgehen, sowie
einen gestuften Finger (522) den in Umfangsrichtung zwischen mindesten einem primären Verriegelungsfinger angeordnet ist.

8. Anschlussanordnung nach Anspruch 7 mit ferner
mehreren primären Verriegelungsfingern (520), die in über den Umfang verteilten Paaren von nebeneinander angeordneten primären Verriegelungsfingern angeordnet sind, und
einem zwischen jedem Paar von primären Verriegelungsfingern angeordneten gestuften Finger.

9. Anschlussanordnung nach Anspruch 1, wobei
ein erhabener Teil des Anschlusskörpers (426) einen auswärts weisenden konischen Teil (472) aufweist, der von einem Außendurchmesser des Anschlusskörpers zu einer Außenfläche (466) des erhabenen Teils des Anschlusskörpers verläuft.

10. Anschlussanordnung nach Anspruch 1 mit ferner
einem an einem Aufnahmeende des Anschlusskörpers (426) ausgebildeten erhabenen Teil, der einen Außendurchmesser im Wesentlichen gleich dem Außendurchmesser des Aufnahmeendes des Anschlusskörpers hat und von dem Aufnahmeende des Anschlusskörpers ausgeht, wobei zu dem erhabenen Teil benachbart eine Ringnut (476) angeordnet ist, die in einer Verriegelungsstellung der Sicherungskappe an der Anschlusskörper die Verriegelungsfinger der Sicherungskappe aufnimmt.

11. Anschlussanordnung nach Anspruch 1, wobei
der Körper der Sicherungskappe schwenkbar verbundene erste und zweite Abschnitte aufweist, die in einem durchgehenden Ringkörper um das Rohrelement (424) verriegelbar sind, und
der erste und der zweite Abschnitt der Sicherungskappe relativ zu einem schwenkbar verbundenen Ende des ersten und des zweiten Abschnitts schwenkbar bewegbar sind, um die Montage der Sicherungskappe um das Rohrelement zu ermöglichen.

12. Anschlussanordnung nach Anspruch 1, wobei die Sekundärverriegelung aufweist:
einen inneren Tragring mit einer von dem Rohrelement durchsetzten Durchgangsbohrung (510),
wobei der innere Tragring ein inneres Ende (508) so positioniert ist, dass es an einer Fläche (438) an dem Rohrelement anliegt, um zwischen der Sicherungskappe und dem Rohrelement eine Sekundärverriegelung zu bilden, wenn das Rohrelement vollständig in die Bohrung in dem Anschlusskörper eingeführt ist,
wobei die Fläche des Rohrelements von der Endform einen Abstand hat und eine erhabene Fläche des Rohrelements definiert, und
mehrere über den Umfang verteilte gestufte Finger (522) zwischen den primären Verriegelungsfingern,
wobei jeder der gestuften Finger eine innere gestufte Fläche aufweist, die so gestaltet ist, dass sie einen radial äußeren Abschnitt des Halteclips überlagert, wenn die Sicherungskappe mit dem Schnellanschlusskörper (426) und dem Rohrelement verriegelt ist, um ein radiales Aufweiten des Halteclips zu verhindern.

13. Anschlussanordnung nach Anspruch 12, wobei
die primären Verriegelungsfinger (520) mehrere über den Umfang verteilte primären Verriegelungsfinger aufweisen, die von einem ersten Ende des Körpers der Sicherungskappe ausgehen, sowie
einen zwischen jedem Paar von primären Verriegelungsfingern angeordneten gestuften Finger (522).

14. Anschlussanordnung nach Anspruch 13 mit ferner
mehreren primären Verriegelungsfingern (520), die in über den Umfang verteilten Paaren von nebeneinander benachbart angeordneten primären Verriegelungsfingern angeordnet sind, und
einem zwischen jedem Paar von primären Verriegelungsfingern angeordneten gestuften Finger (522).

## Revendications

1. Ensemble de raccord de fluide comprenant :
un élément tubulaire (424) ayant une forme d'extrémité espacée d'une première extrémité d'insertion (422) définissant un épaulement (436) disposé radialement ;
un corps (426) de raccord ayant un alésage (440) avec une extrémité ouverte recevant l'élément tubulaire (424) ;
une agrafe de retenue (460) supportée sur le corps (426) de raccord et s'étendant partiellement dans l'alésage (440) pour engager l'épaulement (436) de l'élément tubulaire (424) pour bloquer l'élément tubulaire (424) dans le corps (426) de raccord lorsque la première extrémité d'insertion (422) de l'élément tubulaire (424) est totalement insérée dans l'alésage (440) dans le corps (426) de raccord ;
un capuchon de sûreté (500) monté coulissant par rapport à l'élément tubulaire (424), le capuchon de sûreté définissant un corps annulaire avec une pluralité de doigts principaux de verrouillage (520) avec des projections d'extrémité (530) configurées pour se verrouiller dans une rainure (476) en renfoncement dans le corps (426) de raccord espacée d'une extrémité du corps de raccord pour verrouiller le capuchon de sûreté (500) sur le corps de raccord uniquement lorsque l'élément tubulaire (424) est totalement inséré dans le corps de raccord ; et
un verrou secondaire (508, 522) supporté sur le corps de capuchon de sûreté pour engager un(e) de l'agrafe de retenue (460) et de l'élément tubulaire (424) pour verrouiller de façon secondaire le capuchon de sûreté sur l'élément tubulaire et uniquement lorsque l'élément tubulaire est totalement inséré dans l'alésage dans le corps (426) de raccord.

2. Ensemble de raccord selon la revendication 1 dans lequel les doigts principaux de verrouillage (520) comprennent une pluralité de doigts principaux de verrouillage espacés circonférentiellement s'étendant depuis une première extrémité du corps de capuchon de sûreté.

3. Ensemble de raccord selon la revendication 1 dans lequel les doigts principaux de verrouillage (520) comprennent :
une projection radialement vers l'intérieur formée sur une extrémité flexible des doigts principaux de verrouillage ; et
une rainure s'ouvrant radialement vers l'extérieur formée dans le raccord, espacée de l'extrémité du corps de raccord, la rainure et les projections sur les doigts principaux de verrouillage pouvant être engagées pour verrouiller de façon principale le capuchon de sûreté au corps de raccord uniquement lorsque l'élément tubulaire est totalement inséré dans l'alésage dans le corps de raccord.

4. Ensemble de raccord selon la revendication 1 dans lequel en outre le verrou secondaire comprend :
une bague intérieure de support (504) fixée dans le corps de capuchon de sûreté radialement vers l'intérieur des doigts principaux de verrouillage ;
la bague intérieure de support ayant un alésage traversant (510) à travers lequel l'élément tubulaire s'étend ; et
la bague intérieure de support ayant une extrémité intérieure (508) positionnée pour engager une surface (438) sur l'élément tubulaire (424) pour fournir un verrou secondaire entre le corps de capuchon de sûreté et l'élément tubulaire lorsque l'élément tubulaire est totalement inséré dans l'alésage dans le corps de raccord.

5. Ensemble de raccord selon la revendication 4 dans lequel :
la surface (438) sur l'élément tubulaire est axialement espacée de la forme d'extrémité et définit une surface en surélévation sur l'élément tubulaire.

6. Ensemble de raccord selon la revendication 1 dans lequel le verrou secondaire comprend :
une pluralité de doigts étagés (522) circonférentiellement espacés entre les doigts principaux de verrouillage (520) ; et
chacun des doigts étagés ayant une surface intérieure avec au moins une marche configurée pour recouvrir une partie radialement vers l'extérieur de l'agrafe de retenue (460) lorsque le capuchon de sûreté est verrouillé sur le corps du raccord rapide et l'élément tubulaire pour résister à une extension radialement vers l'extérieur de l'agrafe de retenue.

7. Ensemble de raccord selon la revendication 6 dans lequel :
les doigts principaux de verrouillage (520) incluent en outre une pluralité de doigts principaux de verrouillage circonférentiellement espacés s'étendant depuis une première extrémité du corps de capuchon de sûreté ; et
un doigt étagé (522) disposé de façon circonférentiellement intermédiaire par rapport à au moins un doigt principal de verrouillage.

8. Ensemble de raccord selon la revendication 7 comprenant en outre :
la pluralité de doigts principaux de verrouillage (520) agencés en paires circonférentiellement espacées de doigts principaux de verrouillage adjacents agencés côte à côte ; et
un doigt étagé interposé entre chaque paire de doigts principaux de verrouillage.

9. Ensemble de raccord selon la revendication 1 dans lequel :
une partie en surélévation du corps (426) de raccord inclut une partie conique (472) s'étendant vers l'extérieur s'étendant d'un diamètre extérieur du corps de raccord jusqu'à une surface extérieure (466) de la partie en surélévation sur le corps de raccord.

10. Ensemble de raccord selon la revendication 1 comprenant en outre :
une partie en surélévation formée sur une extrémité de réception du corps (426) de raccord ayant un diamètre extérieur sensiblement égal à un diamètre extérieur de l'extrémité de réception du corps de raccord s'étendant depuis l'extrémité de réception du corps de raccord, un renfoncement annulaire (476) positionné adjacent à la partie en surélévation pour recevoir les doigts de verrouillage du capuchon de sûreté dans une position de verrouillage du capuchon de sûreté sur le corps de raccord.

11. Ensemble de raccord selon la revendication 1 dans lequel :
le corps de capuchon de sûreté a des première et deuxième sections connectées pivotantes verrouillables en un corps annulaire continu autour de l'élément tubulaire (424) ; et
les première et deuxième sections du corps de capuchon de sûreté étant mobiles pivotantes par rapport à une extrémité connectée pivotante des première et deuxième sections pour permettre le montage du corps de capuchon de sûreté autour de l'élément tubulaire.

12. Ensemble de raccord selon la revendication 1 dans lequel le verrou secondaire comprend :
une bague intérieure de support (504) fixée dans le corps de capuchon de sûreté radialement vers l'intérieur des doigts principaux de verrouillage (520) ;
la bague intérieure de support ayant un alésage traversant (510) à travers lequel l'élément tubulaire s'étend ;
la bague intérieure de support ayant une extrémité intérieure (508) positionnée pour engager une surface (438) sur l'élément tubulaire pour fournir un verrou secondaire entre le corps de capuchon de sûreté et l'élément tubulaire lorsque l'élément tubulaire est totalement inséré dans l'alésage dans le corps de raccord ;
la surface sur l'élément tubulaire est axialement espacée de la forme d'extrémité et définit une surface en surélévation sur l'élément tubulaire ;
une pluralité de doigts étagés (522) circonférentiellement espacés entre les doigts principaux de verrouillage ; et
chacun des doigts étagés ayant une surface intérieure étagée configurée pour recouvrir une partie radialement vers l'extérieur de l'agrafe de retenue lorsque le capuchon de sûreté est verrouillé sur le corps de raccord rapide et l'élément tubulaire pour résister à une extension radialement vers l'extérieur de l'agrafe de retenue.

13. Ensemble de raccord selon la revendication 12 dans lequel :
les doigts principaux de verrouillage (520) incluent en outre une pluralité de doigts principaux de verrouillage espacés circonférentiellement s'étendant depuis une première extrémité du corps de capuchon de sûreté ; et
un doigt étagé (522) disposé de façon intermédiaire par rapport à au moins un doigt principal de verrouillage.

14. Ensemble de raccord selon la revendication 13 comprenant en outre :
la pluralité de doigts principaux de verrouillage (520) agencés en paires circonférentiellement espacées de doigts principaux de verrouillage adjacents agencés côte à côte ; et
un doigt étagé (522) interposé entre chaque paire de doigts principaux de verrouillage.
